# EUROPEAN PATENT APPLICATION

(11) **EP 4 764 460 A1**
(43) Date of publication of application: **24.06.2026**
(21) Application number: 24221591.1
(22) Date of filing: 19.12.2024
(51) Int. Cl.: G01N 21/84, G01N 21/47, G01N 21/88

(54) **METHOD AND SYSTEM FOR SURFACE INSPECTION OF A CURED COMPOSITE PART COMPRISING GLASS FIBERS AND CARBON FIBERS, IN PARTICULAR OF AN AIRCRAFT**

(71) Applicant: Airbus S.A.S., 31700 Blagnac (FR)
(72) Inventor: Meng, Liu, 82024 Taufkirchen (DE); Sayeh, Mohamed, 82024 Taufkirchen (DE)
(74) Representative: KASTEL Patentanwälte PartG mbB

(57) **Abstract**

A method for surface inspection of a cured composite part comprising glass fibers (22) and carbon fibers (26), in particular of an aircraft, comprising the steps: illuminating a surface (18) of a composite part (12) to be inspected with infrared light (16) emitted from an IR-light source (14), and capturing an image of the surface (18). The IR-light source (14) is arranged so that the generated infrared light (16) hits the surface (18) at a first angle α to provide a dark field illumination of the surface (18), and the camera (32) is arranged so that it points at the inspected surface (18) at a second angle β to capture the image of the dark field illuminated surface (18). The captured image is evaluated with regard to brightness and contrast to detect one or more glass fiber layers (22) on top of one or more carbon fiber layers (28) within the composite part (12).

## Description

The invention relates to a method for surface inspection of a cured composite part comprising glass fibers and carbon fibers. Further, the invention relates to a system for surface inspection of a cured composite part comprising glass fibers and carbon fibers. In addition, the invention relates to the use of an infrared (IR-) light source and a camera in a method for surface inspection of a cured composite part. The method and the system are in particular suitable for inspecting composite parts of an aircraft.

Many composite parts of an aircraft comprise layers of carbon fibers and layers of glass fibers, i.e. such parts are comprising CFRP (Carbon Fiber Reinforced Polymer) and GFRP (Glass Fiber Reinforced Polymer). For example, one or more glass fiber layers may cover carbon fiber layers. The glass fiber layers are in particular used to avoid a direct contact between the carbon fibers and aluminum when the composite part is attached to another part made of aluminum, which would lead to corrosion.

However, it may happen that in a cured composite part, a layer of glass fibers is missing, or that a layer of glass fibers is at a position where it should not be. Further, e.g. two layers of glass fibers may be at a position where only one layer of glass fibers should be. These are examples of defects of the cured composite part, which need to be detected.

According to the state of the art, the existence of glass fibers can be found by active thermography, which uses a bolometer with additional excitation sources like a halogen lamp or high-power LED flashlight. However, this requires long data acquisition time. Moreover, it often heats up the inspected object by a few degrees. This is not optimal in use cases that require a relative short acquisition time and a minimum impact on high-value objects like e.g. aircraft flaps or other parts of an aircraft.

It is the object of the invention to provide a method and a system for surface inspection of a cured composite part comprising glass fibers and carbon fibers, which detects defects related to the position and number of glass fiber layers faster, with high accuracy, and with a reduced impact on the cured composite part.

The object is solved by a method for surface inspection of a cured composite part comprising glass fibers and carbon fibers, in particular of an aircraft, comprising the steps: illuminating a surface of a composite part to be inspected with infrared light emitted from an IR light source and capturing an image of the surface with a camera, wherein IR light source is arranged so that the infrared light hits the surface at a first angle to provide a dark field illumination of the surface, and wherein the camera is arranged so that it points at the inspected surface at a second angle to capture the image of the dark field illuminated surface; and detecting one or more glass fiber layers on top of one or more carbon fiber layers within the composite part by evaluating the captured image with regard to brightness and contrast.

The invention leads to strong contrast between GFRP and CFRP layers and a short inspection time. In particular, only one exposure at one location is needed. Moreover, it is not necessary to wait for excitation source phasing.

Preferably, the IR light source and the camera are arranged in relation to the inspected surface in such a way that the infrared light and the camera are directed at the surface from the same direction.

For example, the first angle at which the infrared light hits the surface is between 20 and 50 degrees.

Preferably, the first angle at which the infrared light hits the surface is between 25 and 35 degrees.

Most preferably, the first angle at which the infrared light hits the surface is about 30 degrees.

For example, the second angle at which the camera points at the surface is between 30 and 60 degrees.

Preferably, the second angle at which the camera points at the surface is between 40 and 50 degrees

Most preferably, the second angle at which the camera points at the surface is about 45 degrees.

Preferably, the infrared light hits the surface from the same direction from which the camera is pointing at the surface.

Preferably, the first angle is different from the second angle.

In particular, the first angle is smaller than the second angle.

Preferably, the infrared light emitted by the IR-light source forms a light beam emitted in a beam direction and comprising a spatial component that extends perpendicular to the beam direction and parallel to the inspected surface.

Preferably, the camera has a field of view and/or line scan direction that extends parallel to that spatial component of the light beam.

Preferably, the infrared light is at the boundary to visible light.

Preferably, the infrared light has a wavelength of about 850 nm.

Preferably, the camera s a monochrome camera.

Preferably, the camera is an infrared camera.

Preferably, the camera is a CMOS camera.

Preferably, the camera is a line scan camera.

Preferably, the camera comprises a band filter which allows a band of wavelength around 850 nm pass through.

It is also possible that the camera does not comprise a filter.

Thus, an even higher scanning speed for scanning the inspected surface can be achieved.

However, the camera can be configured as a matrix camera as well. This may lead to specific advantages, depending on the application.

Preferably, the IR light source and the camera are positioned above a top edge of the component during inspection, and a mirror is positioned on one or both sides of the component, so that it deflects the infrared light to strike the surface (at the first angle α, the camera being directed to the mirror to point at the surface at the second angle β.

According to another aspect of the invention, a system for surface inspection of a cured composite part comprising glass fibers and carbon fibers in particular of an aircraft is provided, comprising an IR light source and a camera, both configured to perform the method according to the invention.

According to a further aspect of the invention, the use of an IR light source and a camera in a method according to the invention is provided
The strong contrast is due to the fact that GFRP is relatively highly reflective under the dark field an IR light condition according to the invention.

Further, no over- or underexposure is in the image due to an even distribution of light. The system can be positioned relatively close to the surface of the part or object, so that the external light source will not much influence the data quality.

Furthermore, a big and scalable field of view with high spatial resolution is achieved. For example, the system can cover 100 mm to 500 mm. Moreover, the invention leads to a low power consumption, a safe use by the operator, and a compact system which is easy to integrate.

In the following, embodiments of the invention are described in more detail with reference to the accompanying drawings, in which
- **Fig. 1**: depicts a schematic side view of a system when performing the method according to a first embodiment of the invention;
- **Fig. 2**: depicts a schematic side view of the system when performing the method according to a second embodiment of the invention; and
- **Fig. 3**: depicts a schematic front view of the system shown in Fig. 2 when performing the method.

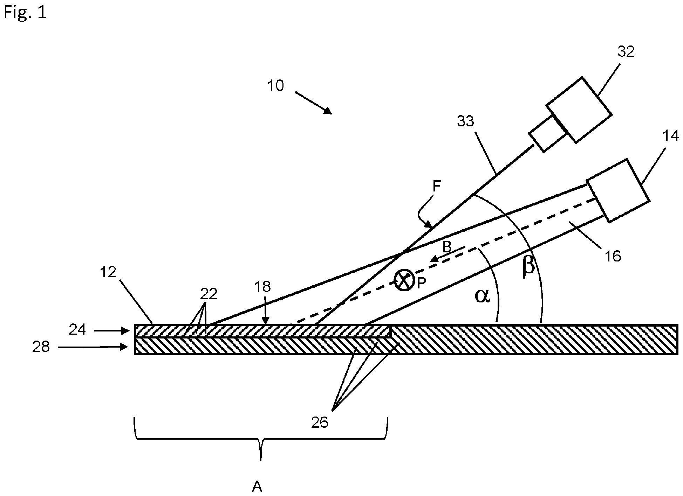

With reference to **Fig. 1****,** a method according to a preferred embodiment of the invention and a preferred system 10 used in the method is described.

The system 10 is designed for surface inspection of a cured composite part 12 of an aircraft. It comprises an infrared or IR-light source 14 which emits infrared (IR) light 16 to illuminate a surface 18 of the composite part 12. The composite part 12 comprises glass fibers 22, which are e.g. arranged as one or more glass fiber layers 24 within composite part 12. Further, the composite part 12 comprises carbon fibers 26, e.g. being arranged as one or more carbon fibre layers 28. In this example, one glass fiber layer 24 is positioned above one carbon fiber layer 26 in an area A of the composite part 12, whereas in other areas is only the glass fiber layer 26.

In other examples, the composite part is made of carbon fibers only. In this case the system 10 is used to find glass or glass fibers or other foreign objects which should not be there. The system might also be used to inspect composite parts of pure glass fibers.

The infrared light source or IR-light source 14 is arranged above the inspected surface 18 in such a way that the generated infrared light 16 hits the surface 18 at a first angle α to provide a dark-field illumination of surface 18.

A camera 32 which is preferably a high-resolution monochrome camera, is positioned as well above surface 18 in a way such that its viewing direction 33 or optical axis points at the surface 18 at a second angle β to capture an image of the surface 18 when it is illuminated with the infrared light 16.

The infrared light source 14 and the camera 32 are arranged at the same side of the inspected surface 18. That means they are arranged in relation to the inspected surface 18 in such a way that the infrared light 16 and the camera 32 are directed at the surface 18 from the same direction, i.e. in Fig. 1 from the right side. In this way, the infrared light 16 which forms a light beam having a beam direction B illuminates the surface 18 at inclination angle α from the same direction from which camera 32 is viewing the illuminated surface 18 at the inclination angle β.

During the inspection of the cured composite part 12, infrared light source 14 and high-resolution camera 32 are positioned relative to the surface 18 to be inspected as described above, wherein infrared light source 14 illuminates the surface 18 with a dark field illumination and camera 32 captures images of the dark field illuminated surface 18 as described above.

Preferably, infrared light source 14 and camera 32 are moved together relative to surface 18 in order to scan it. Both together may form an end-effector unit configured for being mounted to a robot arm for being moved and scanning surface 18.

The image captured by camera 32 is evaluated with regard to brightness and/or contrast. In this way, one or more glass fiber layers 24 which are positioned on one or more of carbon fiber layers 26 are detected.

The captured image is evaluated with regard to image areas or pixels of different brightness and/or contrast to detect glass fibers within the composite part 12. Preferably, image data generated by camera 32 is automatically evaluated by an evaluation system not shown in the figures.

The method and system 10 described here uses the difference in the light absorption rate and ways of reflection between the glass fibers 22 and the carbon fibers 26. Both, the infrared light 16 and the tilt angle α at which the infrared light 16 hits or strikes the surface 18 emphasizes this difference. The glass fibers 22 or glass fiber layer(s) 24 absorb less infrared light than the carbon fibers 26 or carbon fiber layer(s) 28.

Camera 32 is preferably a CMOS camera. The CMOS (complementary metal oxide semiconductor) sensor of camera 32 configured as CMOS camera has a relatively high quantum efficiency at the NIR range. In addition, it is relatively cheap and easy to integrate. Considering all factors, a wavelength of 850 nm is most preferably selected for the IR light source, and monochrome CMOS camera is most preferably used.

Most preferably, the camera 32 is configured as a line scan camera. This relates in an even higher speed of the surface inspection. But nevertheless, a matrix camera may be used as well.

In particular, the method and system 10 make use of the fact that the glass fibers 22 reflect the infrared light 16 more diffused than the carbon fibers 26. This difference contrasts the image in near infrared (NIR) and shortwave infrared (SWIR).

The inclination angle α at which IR light beam 16 hits the surface 18 is most preferably around 30°. However, it may also deviate from that ideal value and be in a range between 25 and 35° or between 20 and 50°. The inclination angle β at which the camera 32 is aimed at the surface 18 is most preferably around 45°. But it may also deviate from that the value and be in range between 40 and 50° or between 30 and 60°. The angle β is usually greater than the angle α for achieving good results.

The infrared light 16 forming a light beam having beam direction B and emitted by IR light source 14 may extend in a direction P which is perpendicular to the direction B of the light beam 16 and parallel to the inspected surface 18. Camera 32 may have a field of view F or line scan direction that extends parallel to the direction P in which the light beam 16 extends.

The light 16 emitted by IR light source 14 is e.g. at the boundary of visible light. For achieving the best results, the wavelength of the IR-light 16 is 850 nm.

By the method described above, and by using the system 10, best contrast of the glass fibers 22 on top of the carbon fibers 26 are achieved.

In particular, it can be determined whether only one layer or two layers 24 of glass fibers are provided on carbon fiber layer 28. Further, it can be detected by whether there is no layer 24 of glass fibers 22 on top of the carbon fibers 26 or carbon fiber layers 28. Thus, it can be detected whether a glass fiber layer 24 is missing or at a wrong position within the cured composite part 12.

Due to the fact that the IR-ight source 14 illuminates the surface 18 at an inclination angle, and camera 32 looks at surface 18 from the same side at an inclination angle to capture images, an influence of the reflection of carbon fibers 26 in the image captured by camera 32 is avoided, which leads to a higher contrast between the glass fibers 22 and the carbon fibers 26.

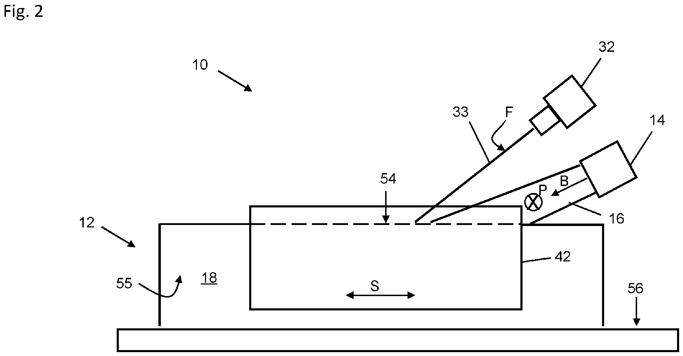

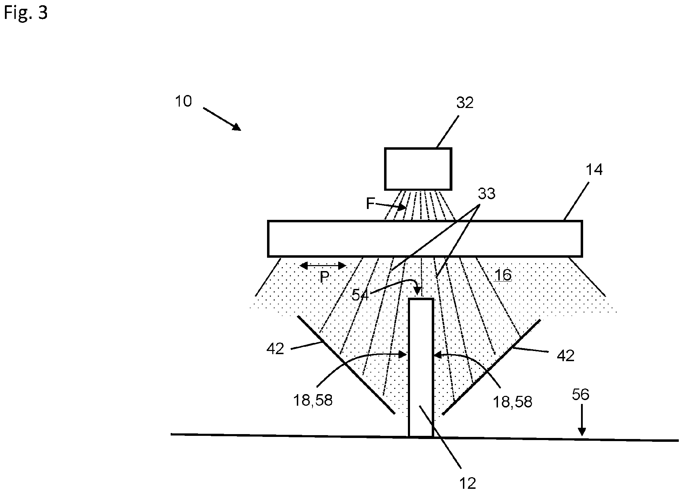

**Figs. 2** **and** **3** show a second embodiment of the system and method as described above. Fig. 2 shows the system 10 during operation, together with the composite part 12 to be inspected, as a side view similar to that of Fig. 1. Fig.3 shows the system 10 during operation, together with the composite part 12 to be inspected, as a front view.

In this embodiment, a mirror arrangement comprising two mirrors 42, 44 is additionally provided in system 10. All other features and details of system 10 are the same as in the first embodiment described above with reference to Fig. 1

In contrast to the method described above with reference to Fig. 1, the composite part 12 to be inspected is vertically arranged in this example, i.e. the inspected surface 18 extends with a spatial component in the direction of the positions of IR-light source 14 and camera 32. IR-light source 14 and camera 32 are both located above a top edge 54 of the composite part 12, wherein the inspected surface 18 of the composite part 12 is located on one or on both sides 55 of the composite part 12.

In other words, the surface 18 to be inspected extend in a plane which is parallel to the viewing direction 33 or optical axis of camera 14, and parallel to the direction B of the IR-light beam 16 emitted from IR-light source 14.

For inspecting the composite part 12 in this example, the IR light source 14 and the IR-camera 32 are arranged as in the example described above with reference to Fig. 1, however the surface 18 to be inspected is oriented vertically, i.e. perpendicular to its orientation shown in Fig. 1.

The infrared light 16 which forms a light beam and which is emitted by IR light source 14 in the beam direction B, extends with a spatial component thereof in a direction P which is perpendicular to the direction B of the emitted IR-light beam 16, and also perpendicular to the inspected surface 18.

Camera 32 has a viewing direction 33 or optical axis and a preferably flat field of view F, or a line scan direction in case of a line scan camera, that extends with a spatial component thereof parallel to the direction P in which the light beam 16 extends.

A mirror 42 is arranged on one side or preferably on both sides 55 of the composite part 12, i.e. of the surface or surfaces 18 to be inspected, so that the IR light 16 emitted by IR-light source 14 is deflected by the mirror 42 to hit or strike the respective surface 18 at the first angle α to provide dark-field illumination of surface 18, and that the viewing direction 33 of the camera 32 is deflected by mirror 42 and directed to the surface 17 to point at the surface 18 at the second angle β.

The surface of each mirror 42 preferably extends with a spatial component S thereof parallel to the surface 12 to be inspected. The IR-light source 14 and the camera 32 are arranged at positions such that they form the angles α and β respectively with respect to that spatial component S.

In the example shown here, in which the composite part 12 with the one or two surfaces 18 is arranged on a base area 56 extending perpendicular to the inspected surfaces 18 of the composite part 12, the angle α at which the infrared light 16 hits or strikes the surface 18, and the angle β at which the camera 32 points at the surface 18, after deflection by mirrors 42, are equal to the respective angles of the IR-light 16 and the camera's 32 viewing direction 33 with the basic surface 56.

All other details and features of the method shown in this example are the same as described above with reference to Fig. 1.

### List of reference signs:

- 10: surface inspection system
- 12: composite part
- 14: infrared light source
- 16: infrared light
- 18: surface
- 22: glass fibers
- 24: glass fibre layer
- 26: carbon fibers
- 28: carbon fibre layer.
- 32: camera
- 33: viewing direction or optical axis of camera
- 42: mirror
- 54: top edge
- 55: sides
- 56: base area

- B: direction of the IR-light beam
- F: Field of view
- P: extension direction of IR-light beam
- S: spatial component of mirror parallel to the surface to be inspected

- α: first angle
- β: second angle

## Claims

1. Method for surface inspection of a cured composite part comprising glass fibers (22) and carbon fibers (26), in particular of an aircraft, comprising the steps:
illuminating a surface (18) of a composite part (12) to be inspected with infrared light (16) emitted from an IR light source (14),
and capturing an image of the surface (18) with a camera (32),
wherein IR light source (14) is arranged so that the infrared light (16) hits the surface (18) at a first angle α to provide a dark field illumination of the surface (18),
and wherein the camera (32) is arranged so that it points at the inspected surface (18) at a second angle β to capture the image of the dark field illuminated surface (18);
and detecting one or more glass fiber layers (22) on top of one or more carbon fiber layers (28) within the composite part (12) by evaluating the captured image with regard to brightness and contrast.

2. Method according to claim 1, **characterized in that** the IR light source (14) and the camera (32) are arranged in relation to the inspected surface (18) in such a way that the infrared light (16) and the camera (32) are directed at the surface (18) from the same direction.

3. Method according to claim 1 or 2, **characterized in that** the first angle α at which the infrared light (16) hits the surface (18) is
- about 30 degrees, or
- between 25 and 35 degrees, or
- between 20 and 50 degrees.

4. Method according to one of the preceding claims, **characterized in that** the second angle β at which the camera (32) points at the surface (18) is
- about 45 degrees, or
- between 40 and 50 degrees, or
- between 30 and 60 degrees
- greater than the first angel α

5. Method according to one of the preceding claims, **characterized in that** the infrared light (16) emitted by the IR-light source (14) forms a light beam emitted in a beam direction (B) and comprising a spatial component (P) that extends perpendicular to the beam direction (B) and parallel to the inspected surface (18).

6. Method according to claim 5, **characterized in that** the camera (32) has a field of view (F) and/or line scan direction that extends parallel to the spatial component (P) of the light beam.

7. Method according to one of the preceding claims, **characterized in that** the infrared light (16)
- is at the boundary to visible light, and/or
- has a wavelength of about 850 nm.

8. Method according to one of the preceding claims, **characterized in that** the camera (32) is a monochrome camera and/or IR-camera.

9. Method according to one of the preceding claims, **characterized in that** the camera (32) is a line scan camera.

10. Method according to one of the preceding claims, **characterized in that** the camera (32)
- comprises a band filter which allows a band of wavelength around 850 nm pass through, and/or
- does not comprise a lens filter.

11. Method according to one of the preceding claims, **characterized in that** the IR light source (14) and the camera (32) are positioned above a top edge (54) of the component (12) during inspection, and a mirror (42) is positioned on one or both sides (55) of the component (12), so that it deflects the infrared light (16) to strike the surface (18) at the first angle α, the camera (32) being directed to the mirror (42) to point at the surface (18) at the second angle β.

12. System for surface inspection of a cured composite part (12) comprising glass fibers (22) and carbon fibers (26), in particular of an aircraft, wherein the system (10) comprises an IR light source (14) and a camera (32) which are both configured to perform the method according to one of the preceding claims.

13. Use of an IR light source (14) and a camera (32) in a method according to one of claims 1 to 11.
